# FASCICULE DE BREVET EUROPEEN

(11) **EP 2 892 806 B1**
(45) Date de publication et mention de la délivrance du brevet: **13.07.2016**
(21) Numéro de dépôt: 13766588.1
(22) Date de dépôt: 27.08.2013
(51) Int. Cl.: F16H 25/20, H02K 7/06, H02K 5/10, F02C 7/32, B64D 41/00, B64D 33/00

(54) **BOITIER A ACCESSOIRES POUR LA COMMANDE DE VOLETS D'UN AÉRONEF**
HILFSANTRIEBSGETRIEBE ZUR STEUERUNG DER AUFTRIEBSKLAPPEN EINES FLUGZEUGS
ACCESSORY DRIVE GEARBOX FOR CONTROLLING THE FLAPS OF AN AIRCRAFT

(30) Priorité: 05.09.2012 FR 1258289
(43) Date de publication de la demande: 15.07.2015
(73) Titulaire: Turbomeca, 64511 Bordes (FR)
(72) Inventeur: LE BORGNE, Eric, F-64800 Igon (FR); MACHIN, Alexandre, F-78300 Poissy (FR)
(74) Mandataire: Gevers & Orès
(86) Numéro de dépôt international: PCT/FR2013/051978
(87) Numéro de publication internationale: WO 2014/037650

(56) Documents cités:
- EP-A1- 1 857 657
- EP-A2- 2 337 188
- DE-A1- 2 325 592
- FR-A1- 2 968 716
- US-A1- 2011 146 434

## Description

L'invention concerne un boîtier à accessoires pour la commande d'au moins un volet d'un aéronef, notamment d'un hélicoptère.

Un boîtier à accessoires est connu du document US 2011/0146434 qui est considéré comme l'art antérieur le plus proche et décrit les caractéristiques du préambule de la revendication 1.

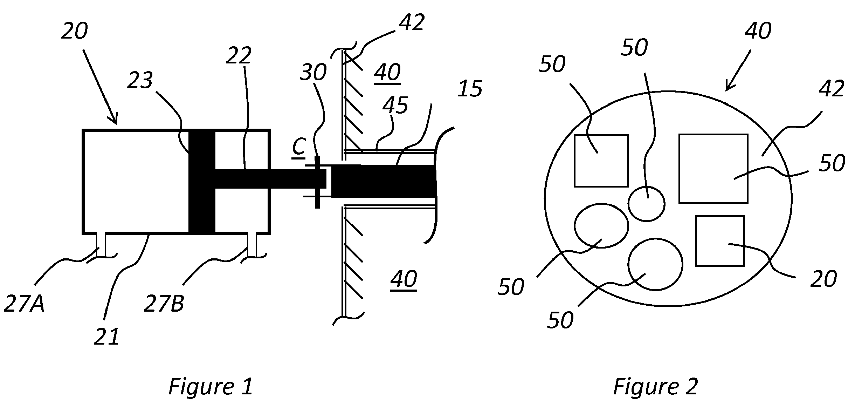

Comme illustré par les figures 1 et 2, un aéronef tel que, par exemple, un hélicoptère comprend de manière connue un moteur à accès avant (ou frontal) comportant un boîtier 40 d'équipements périphériques 50 dudit moteur appelé boîtier à accessoires 40 (Accessory GearBox en anglais). Par le terme « avant », on entend, ici et dans toute la suite, le côté par lequel on accède au boîtier à accessoires 40 pour en effectuer la maintenance. De même, par le terme « arrière », on entend le côté opposé au côté avant par rapport au boîtier à accessoires 40.

Comme illustré par la figure 1, un tel boîtier à accessoires 40 comprend de manière connue une tringle de commande de volets 15 s'étendant en partie dans un conduit 45 du boîtier 40 de manière à coulisser à l'intérieur de celui-ci lorsqu'elle est entrainée en translation.

Il est connu de monter, sur la face avant du carter 42 d'un tel boîtier 40, par des bras de fixations (non représentés), un vérin 20 d'entraînement de ladite tringle 15.

Le vérin 20 comprend un corps 21 creux à l'intérieur duquel coulisse un piston 23 monté sur une tige de piston 22, dite de puissance, s'étendant en partie à l'extérieur du corps. La tringle 15 est reliée, d'une part, aux volets à commander, et, d'autre part, bout à bout avec l'extrémité libre, extérieure au corps, de la tige 22. La liaison entre la tige 22 et la tringle 15 est réalisée par un axe de liaison 30 traversant perpendiculairement la tringle 15 et la tige 22 et les rendant solidaires en translation. Ainsi, de l'avant vers l'arrière, on trouve d'abord le corps du vérin 20 puis la portion de la tige 22 qui s'étend à l'extérieur du corps et enfin la tringle 15 de commande de volets, comme illustré à la figure 2. Lors de l'actionnement du vérin 20, la mise en circulation de fluides de part et d'autre du piston 23 entraîne le déplacement de celui-ci dans un sens ou dans l'autre de sorte que la tige 22 entraîne à son tour en translation la tringle 15 de commande de volets.

Lors de la maintenance du moteur, il est nécessaire de monter (ou de démonter) l'axe de liaison 30 entre la tige 22 et la tringle 15. Or, comme illustré à la figure 1, cet axe de liaison 30 n'est pas accessible directement par un opérateur depuis l'avant car il est situé derrière le vérin 20, dans une zone C située entre le corps du vérin 20 et le boîtier à accessoires 40. Un tel montage nécessite donc de démonter au moins une partie des équipements périphériques 50 du boîtier 40 pour accéder latéralement à l'axe de liaison 30, ce qui entraîne une perte de temps et augmente les coûts de maintenance de l'aéronef, présentant ainsi un premier inconvénient.

De plus, malgré un tel démontage des équipements périphériques 50 du boîtier 40, l'axe de liaison 30 reste difficilement accessible et les manipulations de montage (ou de démontage) de l'axe 30 sont réalisées en aveugle par un opérateur, ce qui les rend complexes et chronophages, ce qui présente un deuxième inconvénient.

Par ailleurs, comme illustré par la figure 1, l'aménagement d'une zone d'accessibilité C à l'axe de liaison 30, entre le boîtier à accessoires 40 et le vérin 20, nécessite d'éloigner vers l'avant le vérin 20 du boîtier à accessoires 40. Une telle déportation impose un montage du vérin 20 sur le boîtier à accessoires 40 avec un porte-à-faux important, ce qui rend le vérin 20 particulièrement vulnérable aux différentes excitations vibratoires du turbomoteur, entraînant des problèmes de tenue mécanique des fixations du vérin 20 sur le carter 42 du boîtier à accessoires 40, ce qui présente un troisième inconvénient.

Enfin, une portion des canalisations externes 27A et 27B d'entrée et de sortie de fluide du vérin 20, illustrées partiellement par la figure 1, peuvent gêner l'accès à la zone d'accessibilité C, ce qui complexifie davantage les opérations de maintenance et présente un quatrième inconvénient.

L'invention est née à l'origine pour répondre à un problème relatif à l'utilisation d'un vérin hydraulique mais elle s'applique à tout type de vérin, par exemple, un vérin pneumatique, électrique, électropneumatique, électromécanique, électro hydraulique, etc.

La présente invention a pour but d'éliminer au moins en partie ces inconvénients en proposant un boîtier à accessoires pour la commande de volets d'un aéronef permettant un montage et un démontage aisé et rapide de la liaison entre la tige de piston et la tringle de commande des volets de sorte à réduire le temps et le coût de maintenance de l'aéronef.

Ainsi, l'invention concerne un boîtier à accessoires de turbomoteur pour aéronef, ledit boîtier comprenant un carter, une tringle de commande de volets de l'aéronef agencée pour coulisser axialement à l'intérieur dudit boîtier et un vérin d'entraînement de ladite tringle monté sur ledit carter, ledit vérin comprenant un corps creux, un piston agencé pour se déplacer en translation à l'intérieur dudit corps et une tige de piston reliée audit piston et s'étendant au moins en partie à l'extérieur du corps du vérin, ladite tige étant reliée à la tringle, le boîtier étant remarquable en ce que le corps du vérin est disposé entre la liaison, de la tige à la tringle, et le carter du boîtier.

Un tel boîtier permet de déporter la liaison de la tige à la tringle en avant du vérin. Par le terme « avant », on entend, ici et dans toute la suite, le côté duquel un opérateur se tient afin d'effectuer la maintenance du boîtier à accessoires. Par le terme « arrière », on entend le côté opposé au côté avant par rapport au boîtier à accessoires.

La maintenance est ainsi aisée et rapide pour un opérateur se tenant devant le boîtier à accessoires puisque celui-ci a directement accès à la liaison de la tige à la tringle pour pouvoir le monter ou le démonter.

Un tel vérin peut en outre être monté directement, plaqué, sur le carter du boîtier à accessoires de sorte qu'il n'est plus nécessaire de ménager une zone d'accessibilité entre le vérin et le boîtier à accessoires, ce qui permet de réduire le porte-à-faux du vérin par rapport au boîtier à accessoires et donc de rendre le vérin plus robuste vis-à-vis des vibrations générées par le moteur.

Lorsque le corps du vérin est monté, plaqué, directement sur le carter, les canalisations externes d'entrée et de sortie de fluide du vérin peuvent être intégrées directement à travers le carter du boîtier de sorte à libérer de l'espace autour du corps du vérin. Par exemple, l'une des canalisations peut être intégrée directement dans une paroi du corps du vérin et l'autre canalisation peut s'étendre du corps directement à travers le carter.

De préférence, la tige de piston est creuse et traverse de part en part le corps creux, la tringle de commande étant disposée coaxialement à l'intérieur de la tige de piston.

Ainsi, en faisant passer la tringle de commande à travers le corps du vérin, la liaison de la tige à la tringle peut être réalisée en avant du vérin.

Selon une caractéristique de l'invention, le corps du vérin comprend, au niveau de son extrémité distale, une première paroi comprenant une première ouverture à travers laquelle coulisse la tige de piston et, au niveau de son extrémité proximale, une seconde paroi comprenant une seconde ouverture à travers laquelle coulisse également la tige de piston, la tige et la tringle étant reliées au niveau de leurs extrémités proximales respectives de sorte à être solidaires en translation. La tige de piston possède alors une longueur axiale supérieure à la longueur axiale du corps creux du vérin.

Par le terme « proximal », on entend, ici et dans toute la suite, au plus proche du côté du boîtier où un opérateur se tient afin d'y accéder pour en effectuer la maintenance. De même, par le terme « distale », on entend, ici et dans toute la suite, au plus distant du côté du boîtier où un opérateur se tient afin d'y accéder pour en effectuer la maintenance.

Selon un aspect de l'invention, les liaisons entre la tige de piston et, respectivement, la première ouverture et la seconde ouverture, sont étanches. De préférence, le vérin comprend, au niveau de chaque ouverture de coulissement de la tige, un joint d'étanchéité de sorte à étanchéifier la liaison entre la tige et le corps du vérin.

De préférence, la tige de piston et la tringle de commande sont reliées par un axe de liaison traversant perpendiculairement la tige et la tringle. L'utilisation d'un tel axe de liaison permet de maintenir solidement la tige et la tringle solidaires en translation.

Avantageusement, la tringle de commande comprend, au niveau de son extrémité proximale, une rotule de blocage de la tringle à l'intérieur de la tige. De préférence, la rotule de blocage se présente sous la forme d'une boule en contact direct avec la tige sur l'ensemble d'une surface annulaire. Une telle rotule permet d'éviter qu'un jeu n'existe entre la tringle et la tige au niveau de leur liaison.

Selon une caractéristique de l'invention, la rotule est traversée de part en part par l'axe de fixation. Une telle liaison permet de fixer solidement la tringle à la tige et de les maintenir coaxiales l'une par rapport à l'autre.

Selon une autre caractéristique de l'invention, le piston est disposé entre l'extrémité proximale et l'extrémité distale de la tige, de préférence sensiblement en son milieu. Un tel positionnement du piston permet de libérer l'extrémité proximale de la tige de manière à autoriser la liaison de la tige et de la tringle au niveau de leurs extrémités proximales respectives. Le piston sépare ainsi la tige en une portion distale et en une portion proximale, cette dernière comprenant alors la liaison de la tige à la tringle.

De préférence, le piston se présente sous la forme d'un disque s'étendant transversalement à l'axe de la tige.

Selon un aspect de l'invention, le piston sépare l'intérieur du corps creux du vérin en un espace proximal et un espace distal, le corps comprenant une première canalisation de circulation d'un premier fluide, s'étendant entre l'espace proximal et le carter du boîtier et une deuxième canalisation de circulation d'un deuxième fluide, s'étendant entre l'espace distal et le carter du boîtier.

De préférence, la première canalisation est intégrée dans une paroi du corps creux de sorte à déboucher à l'extérieur du corps au niveau du carter du boîtier et/ou la deuxième canalisation débouche à l'extérieur du corps au niveau du carter du boîtier. Ainsi, le vérin possède un encombrement limité et peut être monté, plaqué, directement contre le carter du boîtier ce qui limite le porte-à-faux du vérin par rapport au boîtier à accessoires.

L'invention concerne aussi un procédé de montage d'un vérin tel que défini ci-dessus comprenant une étape de disposition du corps du vérin sur le carter du boîtier et une étape de liaison de la tige de piston à la tringle de commande de sorte que le corps du vérin soit disposé entre la liaison de la tige à la tringle et le carter du boîtier.

De préférence, le procédé comprend une étape de disposition de la tringle de commande coaxialement à l'intérieur de la tige de piston et une étape de liaison de la tringle de commande et de la tige de piston, de préférence par un axe de liaison, au niveau de leurs extrémités proximales respectives.

L'invention concerne aussi un aéronef, notamment du type hélicoptère, comprenant un turbomoteur, au moins un volet à commander et un boîtier à accessoires tel que défini ci-dessus dont la tringle de commande est reliée audit volet.

D'autres caractéristiques et avantages de l'invention apparaîtront lors de la description qui suit faite en regard des figures annexées données à titre d'exemples non limitatifs et dans lesquelles des références identiques sont données à des objets semblables.
La figure 1 est une vue schématique en coupe transversale d'un boîtier à accessoires de l'art antérieur.
La figure 2 est une vue de la face avant d'un boîtier à accessoires de l'art antérieur.
La figure 3 est une vue schématique en coupe transversale d'un boîtier à accessoires selon l'invention.
La figure 4 est une vue de la face avant d'un boîtier à accessoires selon l'invention.

### Description du boîtier à accessoires selon l'invention

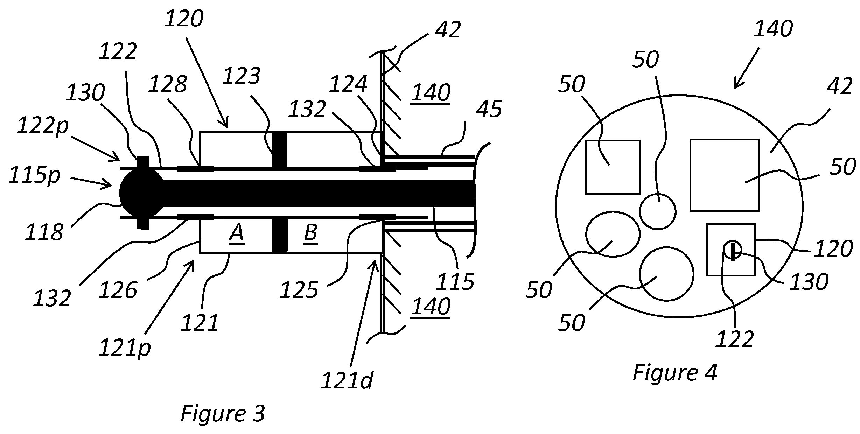

Comme illustré schématiquement à la figure 4, un aéronef tel que, par exemple, un hélicoptère comprend de manière connue un moteur à accès avant (ou frontal) comportant un boîtier 140 d'équipements périphériques 50 du moteur appelé boîtier à accessoires (Accessory GearBox en anglais).

Comme illustré aux figures 3 et 4, un boîtier à accessoires 140 comprend un carter 42 dans lequel est formé un conduit 45 à l'intérieur duquel est disposée une tringle 115 de commande de volets de l'aéronef agencée pour coulisser axialement à l'intérieur dudit conduit 45. Autrement dit, un déplacement en translation de la tringle 115 permet de modifier l'inclinaison d'au moins un volet de l'aéronef.

En référence à la figure 3, le boîtier à accessoires 140 comporte un vérin 120 d'entraînement de ladite tringle 115 qui est monté sur la face avant du carter 42 du boîtier à accessoires 140.

Le vérin 120 comprend un corps creux 121 dans lequel est montée une tige de piston 122 solidaire d'un piston 123.

Le corps 121 du vérin 120 se présente sous la forme d'un cylindre longitudinal s'étendant perpendiculairement à la face avant du carter 42 et dont la section peut être diverse, en particulier, carrée ou circulaire.

Le corps 121 comprend, au niveau de son extrémité distale 121 d, une première paroi 124 comprenant une première ouverture 125 à travers laquelle coulisse la tige de piston 122 et, au niveau de son extrémité proximale 121 p, une seconde paroi 126 comprenant une seconde ouverture 128 à travers laquelle coulisse la tige de piston 122.

Le piston 123 est monté sur la tige de piston 122, sensiblement en son milieu, et forment une structure monobloc. Le piston 123 est agencé pour se déplacer en translation à l'intérieur du corps 121 selon l'axe du vérin 120. Le piston 123 sépare le volume intérieur du corps 121 en deux espaces A et B, chaque espace pouvant être au moins en partie occupé par un fluide pouvant entrer et sortir dudit espace par l'intermédiaire d'une canalisation (non représentées). Ainsi, de manière connue, on peut déplacer le piston 123 en modifiant la pression de fluide dans les espaces A, B du corps 121.

De manière préférée, une paroi longitudinale du corps creux 121 intègre au moins une desdites canalisations de manière à permettre la connexion fluidique au carter 42 du boîtier 140 tout en limitant l'encombrement global du vérin 120.

La tige de piston 122 se présente sous la forme d'un tube cylindrique creux à l'intérieur duquel la tringle de commande 115 est disposée coaxialement. Dans cet exemple, en référence à la figure 3, la tige de piston 122 possède une longueur axiale supérieure à la longueur axiale du corps creux 121 du vérin 120.

La tige de piston 122 et la tringle de commande de volets 115 sont reliées, au niveau de leurs extrémités proximales respectives 122p et 115p, par un axe de liaison 130 les rendant solidaires en translation.

La tringle de commande 115 comprend, au niveau de son extrémité proximale 115p, une rotule de blocage 118 de la tringle 115 dans la tige 122, la rotule 118 étant traversée de part en part par l'axe de liaison 130.

Une telle liaison permet ainsi la disposition et le maintien du corps 121, de la tige de piston 122, du piston 123 et de la tringle de commande 115 coaxialement les uns par rapport aux autres.

Des joints d'étanchéité 132, par exemple en X, sont disposés, par exemple en paliers, entre la tige 122 et le corps 121, au niveau respectivement des ouvertures 125 et 128, de sorte à étanchéifier les liaisons entre la tige et le corps du vérin.

La figure 4 illustre la face avant du boîtier à accessoires 140 selon l'invention et notamment la liaison, entre la tige de piston 122 et la tringle de commande 115, réalisée par l'axe de liaison 130, dont l'accessibilité, en avant du vérin 120, est alors aisée pour un opérateur.

Une telle accessibilité permet d'éviter le démontage des équipements périphériques 50, ce qui simplifie la maintenance du boîtier à accessoires et permet d'en réduire le temps et les coûts.

### Assemblage du vérin

Afin de monter le vérin sur le carter 42 du boîtier à accessoires 140, on dispose tout d'abord, dans une première étape, le corps du vérin 121 sur le carter 42 du boîtier 140 de sorte que la tringle de commande 115 soit insérée à l'intérieur de tige de piston 122 puis on relie, dans une deuxième étape, avec un axe de liaison 130, la tige de piston 122 à la tringle de commande 115 au niveau de leurs extrémités proximales respectives 115p et 122p de sorte que le corps 121 du vérin 120 soit disposé entre l'axe de liaison 130 et le carter 42 du boîtier 140.

En référence à la figure 4, un opérateur peut donc monter ou démonter très aisément l'axe de liaison 130 qui se trouve en avant du vérin et est donc plus aisément et rapidement accessible pour un opérateur par comparaison à l'art antérieur.

### Mis en oeuvre du vérin

Afin d'actionner le vérin 120, on régule la pression du fluide dans les canalisations (non représentées) alimentant les espaces A, B du corps creux 121 de sorte que le piston 123 se déplace à l'intérieur du corps creux 121 dans le sens souhaité.

De manière avantageuse, l'une ou les deux canalisations d'alimentation en fluide des espaces A et B peuvent être au moins partiellement intégrées directement dans le boîtier à accessoires 140 de manière à dégager de l'espace autour du vérin 120. En effet, comme l'axe de liaison 130 est situé en avant du corps creux 121, il n'est plus nécessaire de ménager un espace entre le corps creux 121 et le carter 42.

Lorsque le piston 123 se déplace, dans un sens ou dans l'autre, à l'intérieur du corps creux 121, il entraîne la tige de piston 122 en translation.

Lors de son coulissement à travers le corps 121, la tige de piston 122 entraîne à son tour la tringle 115, permettant ainsi la commande des volets associés.

## Revendications

1. Boîtier à accessoires de turbomoteur pour aéronef, ledit boîtier (140) comprenant un carter (42), une tringle (115) agencée pour coulisser axialement à l'intérieur dudit boîtier (140) et un vérin (120) d'entraînement de ladite tringle (115) monté sur ledit carter (42), ledit vérin (120) comprenant un corps creux (121), un piston (123) agencé pour se déplacer en translation à l'intérieur dudit corps (121) et une tige de piston (122) reliée audit piston (123) et s'étendant au moins en partie à l'extérieur du corps (121) du vérin (120), ladite tige (122) étant reliée à la tringle (115), le boîtier (140) étant **caractérisé en ce que** ladite tringle (115) est une tringle de commande de volets de l'aéronef et le corps (121) du vérin (120) est disposé entre la liaison, de la tige (122) à la tringle (115), et le carter (42) du boîtier (140).

2. Boîtier selon la revendication 1, dans lequel la tige de piston (122) est creuse et traverse de part en part le corps creux (121), la tringle de commande (115) étant disposée coaxialement à l'intérieur de la tige de piston (122).

3. Boîtier selon l'une des revendications précédentes, dans lequel le corps (121) du vérin (122) comprend, au niveau de son extrémité distale (121 d), une première paroi (124) comprenant une première ouverture (125) à travers laquelle coulisse la tige de piston (122) et, au niveau de son extrémité proximale (121 p), une seconde paroi (126) comprenant une seconde ouverture (128) à travers laquelle coulisse la tige de piston (122), la tige (122) et la tringle (115) étant reliées au niveau de leurs extrémités proximales respectives (122p, 115p) de sorte à être solidaires en translation.

4. Boîtier selon l'une des revendications précédentes, dans lequel la tige de piston (122) et la tringle de commande (115) sont reliées par un axe de liaison (130) traversant perpendiculairement la tige (122) et la tringle (115).

5. Boîtier selon l'une des revendications précédentes, dans lequel la tringle de commande (115) comprend, au niveau de son extrémité proximale (115p), une rotule de blocage (118) de la tringle (115) à l'intérieur de la tige (122).

6. Boîtier selon la revendication 5, dans lequel la rotule de blocage se présente sous la forme d'une boule (118) en contact direct avec la tige (122) sur l'ensemble d'une surface annulaire.

7. Boîtier selon l'une des revendications précédentes 5 et 6, dans lequel la rotule (118) est traversée de part en part par l'axe de fixation (130).

8. Boîtier selon l'une des revendications précédentes, dans lequel le piston (123) est disposé entre l'extrémité proximale (122p) et l'extrémité distale de la tige (122).

9. Boîtier selon la revendication 3, dans lequel les liaisons entre la tige de piston (122) et, respectivement, la première ouverture (125) et la seconde ouverture (128), sont étanches.

10. Aéronef comprenant un turbomoteur, au moins un volet à commander et un boîtier à accessoires (140) selon l'une des revendications précédentes dont la tringle (115) de commande est reliée audit volet.

## Patentansprüche

1. Gehäuse von Zubehör des Turbinentriebwerks für ein Flugzeug, wobei das Gehäuse (140) einen Kasten (42), einen Stab (115), der eingerichtet ist axial im Inneren des Gehäuses (140) zu gleiten, und einen Zylinder (120) zum Antreiben des Stabs (115) umfasst, der an dem Kasten (42) angebracht ist, wobei der Zylinder (120) einen hohlen Körper (121), einen Kolben (123), der eingerichtet ist, sich translatorisch im Inneren des Körpers (121) zu bewegen, und eine Kolbenstange (122), die mit dem Kolben (123) verbunden ist und sich zumindest teilweise außerhalb des Körpers (121) des Zylinders (120) erstreckt, umfasst, wobei die Stange (122) mit dem Stab (115) verbunden ist, wobei das Gehäuse (140) **dadurch gekennzeichnet ist, dass** der Stab (115) ein Stab zum Steuern der Klappen des Flugzeugs ist, und dass der Körper (121) des Zylinders (120) zwischen der Verbindung der Stange (122) mit dem Stab (115) und dem Kasten (42) des Gehäuses (140) angebracht ist.

2. Gehäuse nach Anspruch 1, wobei die Kolbenstange (122) hohl ist und von einer Seite zur anderen Seite den hohlen Körper (121), die Stange zur Steuerung (115) durchläuft, die koaxial im Inneren der Kolbenstange (122) angeordnet ist.

3. Gehäuse nach einem der vorhergehenden Ansprüche, wobei der Körper (121) des Zylinders (122) bei seinem distalen Ende (121 d) eine erste Wand (124), die eine erste Öffnung (125) umfasst, durch welche die Kolbenstange (122) gleitet, und bei seinem proximalen Ende (121 p) eine zweite Wand (126) umfasst, die eine zweite Öffnung (128) umfasst, durch welche die Kolbenstange (122) gleitet, wobei die Stange (122) und der Stab (115) bei ihren jeweiligen proximalen Enden (122p, 115p) so verbunden sind, dass sie translationsfest sind.

4. Gehäuse nach einem der vorhergehenden Ansprüche, wobei die Kolbenstange (122) und der Stab zum Steuern (115) durch eine Verbindungsachse (130) verbunden sind, die senkrecht die Stange (122) und den Stab (115) durchläuft.

5. Gehäuse nach einem der vorhergehenden Ansprüche, wobei der Stab zum Steuern (115) bei seinem proximalen Ende (115p) ein Drehgelenk zum Blockieren (118) der Stab (115) im Inneren der Stange (122) umfasst.

6. Gehäuse nach Anspruch 5, wobei das Drehgelenk zum Blockieren die Form einer Kugel (118) im direkten Kontakt mit der Stange (122) auf einer gesamten ringförmigen Oberfläche aufweist.

7. Gehäuse nach einem der vorhergehenden Ansprüche 5 und 6, wobei das Drehgelenk (118) von einer Seite zur anderen Seite die Befestigungsachse (130) durchläuft.

8. Gehäuse nach einem der vorhergehenden Ansprüche, wobei der Kolben (123) zwischen dem proximalen Ende (122p) und dem distalen Ende der Stange (122) angeordnet ist.

9. Gehäuse nach Anspruch 3, wobei die Verbindungen zwischen der Kolbenstange (122) und der ersten Öffnung (125) und der zweiten Öffnung (128) jeweils dicht sind.

10. Flugzeug, das ein Turbinentriebwerk, zumindest eine Klappe zum Steuern und ein Gehäuse für Zubehör (140) nach einem der vorhergehenden Ansprüche umfasst, wobei der Stab (115) zum Steuern mit der Klappe verbunden ist.

## Claims

1. Accessory gearbox for a turboshaft engine of an aircraft, said gearbox (140) comprising a casing (42), a rod (115) arranged so as to slide axially inside said gearbox (140) and an actuator (120) for driving said control rod (115) which is mounted on said casing (42), said actuator (120) comprising a hollow body (121), a piston (123) which is arranged so as to move in translation inside said body (121), and a piston rod (122) which is connected to said piston (123) and extends at least in part outside the body (121) of the actuator (120), said piston rod (122) being connected to the control rod (115), the gearbox (140) being **characterised in that** said rod (115) is an aircraft wing flap control rod and the body (121) of the actuator (120) is arranged between the connection of the piston rod (122) and the control rod (115), and the casing (42) of the gearbox (140).

2. Accessory gearbox according to claim 1, wherein the piston rod (122) is hollow and crosses right through the hollow body (121), the control rod (115) being arranged coaxially inside the piston rod (122).

3. Accessory gearbox according to either of the preceding claims, wherein the body (121) of the actuator (122) comprises, in the region of its distal end (121d), a first wall (124) comprising a first opening (125) through which the piston rod (122) slides and, in the region of its proximal end (121 p), a second wall (126) comprising a second opening (128) through which the piston rod (122) slides, the piston rod (122) and the control rod (115) being connected in the region of their respective proximal ends (122p, 115p) so as to be fixed together for conjoint translational movement.

4. Accessory gearbox according to any of the preceding claims, wherein the piston rod (122) and the control rod (115) are connected by means of a connection shaft (130) perpendicularly crossing the piston rod (122) and the control rod (115).

5. Accessory gearbox according to any of the preceding claims, wherein the control rod (115) comprises a ball joint (118) in the region of its proximal end (115p) for blocking the control rod (115) inside the piston rod (122).

6. Accessory gearbox according to claim 5, wherein the blocking ball joint is in the form of a ball (118) which is in direct contact with the piston rod (122) across an entire annular surface.

7. Accessory gearbox according to either claim 5 or claim 6, wherein the connection shaft (130) crosses right through the ball joint (118).

8. Accessory gearbox according to any of the preceding claims, wherein the piston (123) is arranged between the proximal end (122p) and the distal end of the piston rod (122).

9. Accessory gearbox according to claim 3, wherein the connections between the piston rod (122) and the first opening (125) and the second opening (128) respectively are sealed.

10. Aircraft comprising a turboshaft engine, at least one wing flap to be controlled and an accessory gearbox (140) according to any of the preceding claims, the control rod (115) of which is connected to said wing flap.
